# EUROPEAN PATENT SPECIFICATION

(11) **EP 2 142 261 B1**
(45) Date of publication and mention of the grant of the patent: **23.05.2018**
(21) Application number: 08746045.7
(22) Date of filing: 17.04.2008
(51) Int. Cl.: A62B 23/02, A41D 13/11

(54) **MAINTENANCE-FREE FLAT-FOLD RESPIRATOR THAT INCLUDES A GRASPABLE TAB**
WARTUNGSFREIE FLACHGEFALTETE ATEMSCHUTZMASKE MIT GREIFBARER LASCHE
RESPIRATEUR REPLIABLE SANS ENTRETIEN COMPRENANT UNE LANGUETTE DE PRÉHENSION

(30) Priority: 03.05.2007 US 743723
(43) Date of publication of application: 13.01.2010
(73) Proprietor: 3M Innovative Properties Company, St. Paul, MN 55133-3427 (US)
(72) Inventor: GLOAG, Nicholas, J., Bracknell Berkshire RG12 8HT (GB); WILSON, Audra, A., Aycliffe Co. Durham DL5 6AF (GB); FACER, John, M., Bracknell Berkshire RG12 8HT (GB); HENDERSON, Christopher, P., Bracknell Berkshire RG12 8HT (GB)
(74) Representative: Herzog, Fiesser & Partner Patentanwälte PartG mbB
(86) International application number: PCT/US2008/060558
(87) International publication number: WO 2008/137272

(56) References cited:
- US-A- 2 507 447
- US-A- 2 752 916
- US-A- 4 248 220

## Description

The present invention pertains to a maintenance-free, flat-fold respirator that is capable of being folded flat for storage and, during use, is capable of forming a cup-shaped air chamber over the wearer's nose and mouth. A graspable tab is provided along the mask body periphery to assist in opening the mask from its storage configuration to its open in-use configuration.

### BACKGROUND

Maintenance-free respirators (sometimes referred to as "filtering face masks" or "filtering face pieces") are worn over the breathing passages of a person for two common purposes: (1) to prevent impurities or contaminants from entering the wearer's breathing track; and (2) to protect other persons or things from being exposed to pathogens and other contaminants exhaled by the wearer. In the first situation, the respirator is worn in an environment where the air contains particles that are harmful to the wearer, for example, in an auto body shop. In the second situation, the maintenance-free respirator is worn in an environment where there is risk of contamination to others persons or things, for example, in an operating room or clean room.

Maintenance-free respirators are lightweight products that have the filter media incorporated into the mask body itself. Maintenance-free respirators do not use attachable filter cartridges or insert molded filter elements (see, for example, U.S. Patent 4,790,306 to Braun). As such, maintenance-free respirators are relatively simple in construction and are easy to use. Maintenance-free respirators commonly take the form of a molded cup-shaped structure - see, for example, U.S. Patents 5,307,796 to Kronzer et al., and 6,041,782, 6,119,691, and 6,923,182 to Angadjivand et al. One particular molded cup-shaped mask has a tab placed on its outside surface to make it easy to grasp - see U.S. Patent 6,948,499 to Griesbach.

Another kind of maintenance-free respirator is a flat-fold respirator. These respirators often include a plurality of panels that can be folded into a generally planar arrangement for respirator storage. Examples of flat-fold respirators are shown in U.S. Patent 6,886,563 to Bostock et al. and U.S. Patents 6,394,090, D448,472, and D443,927 to Chen. To don a flat-fold respirator, the panels are unfolded to create a cup-shaped configuration that creates an air chamber over the nose and mouth of the wearer. Unlike the molded maintenance-free respirators, the flat-fold respirators require that the user grasp the panels and pull them apart with their fingers to create an open in-use configuration. US 2,752,916 A discloses a respirator mask body according to the preamble of claim 1.

### SUMMARY OF THE INVENTION

If the user touches the mask body interior with their fingers when opening a flat-fold mask, contaminants may be placed within the mask interior, making the respirator unsafe for the wearer to use. The present invention addresses a need to make it easier for respirator users to open a flat-fold maintenance-free respirator from a folded, closed state without having to make finger contact with the interior of the mask body.

The present invention provides a new maintenance-free, flat-fold respirator that comprises: (a) a mask body that comprises a plurality of panels that can fold in towards each other and that can unfold into an open in-use configuration; and (b) a graspable tab that extends from the regular periphery of at least one of the panel(s) such that the tab assists the user in pulling the panel(s) from a folded condition to open the mask body into an open ready-to-use configuration.

The inventive flat-fold respirator differs from known respirators of this kind in that it includes a graspable tab that extends from the face-contacting periphery of the mask body. Known flat-fold, maintenance-free respirators did not include such tabs and thus were more difficult to open in a safe manner. Accordingly, the present invention reduces the opportunity for contaminants to get into the mask body interior when the respirator is being donned by the user. The invention is also beneficial in that it can allow the wearer to more easily reposition the mask body on the wearer's face while minimizing contamination risk.

These and other advantages of the invention are more fully shown and described in the drawings and detailed description of this invention, where like reference numerals are used to represent similar parts. It is to be understood, however, that the drawings and description are for the purposes of illustration only and should not be read in a manner that would unduly limit the scope of this invention.

### Glossary

As used in this document, the following terms are defined as set below:
"centrally" means located such that a plane bisects the part essentially symmetrically;
"central panel" means a panel that is located between upper and lower panels;
"central plane" means a plane that bisects the mask normally to its crosswise dimension;
"clean air" means a volume of atmospheric ambient air that has been filtered to remove contaminants;
"comprises (or comprising)" means its definition as is standard in patent terminology, being an open-ended term that is generally synonymous with "includes", "having", or "containing". Although "comprises", "includes", "having", and "containing" and variations thereof are commonly-used, open-ended terms, this invention also may be suitably described using narrower terms such as "consists essentially of', which is semi open-ended term in that it excludes only those things or elements that would have a deleterious effect on the performance of the inventive maintenance-free respirator in serving its intended function;
"contaminants" means particles (including dusts, mists, and fumes) and/or other substances that generally may not be considered to be particles (e.g., organic vapors, et cetera) but which may be suspended in air, including air in an exhale flow stream;
"crosswise dimension" is the dimension that extends across a wearer's nose when the respirator is worn;
"exterior gas space" means the ambient atmospheric gas space into which exhaled gas enters after passing through and beyond the mask body and/or exhalation valve;
"face-contacting perimeter" means the perimeter that would be in contact with a wearer's face when the respirator is being worn;
"filtration layer" means one or more layers of material, which layer(s) is adapted for the primary purpose of removing contaminants (such as particles) from an air stream that passes through it;
"filter media" means an air-permeable structure that is designed to remove contaminants from air that passes through it;
"flat-fold" means the respirator has at least one line of demarcation about which the respirator generally folds or bends in response to simple manual pressure;
"graspable" means that the part is specifically designed for being grasped by a person's fingers;
"harness" means a structure or combination of parts that assists in supporting a mask body on a wearer's face;
"integral" means that it is part of the whole panel or mask body and is not a separate piece that is attached thereto;
"interior gas space" means the space between a mask body and a person's face;
"line of demarcation" means a fold, seam, weld line, bond line, stitch line, hinge line, and/or any combination thereof;
"lower panel" means a panel that extends under or makes contact with a wearer's chin when the respirator is being worn by a person;
"maintenance-free" means that the mask body itself is air-permeable and is designed to filter air that passes through it - there are no filter cartridges or insert molded filter elements attached to or molded into the mask body for this purpose;
"mask body" means an air permeable structure that can fit at least over the nose and mouth of a person and that helps define an interior gas space separated from an exterior gas space;
"nose clip" means a mechanical device (other than a nose foam), which device is adapted for use on a mask body to improve the seal at least around a wearer's nose;
"nose foam" means a foam-type material that is adapted for placement on the interior of a mask body to improve fit and/or wearer comfort over the nose when the respirator is worn;
"nose region" means the portion that resides over a person's nose when the respirator is worn;
"panel" means a three-dimensional part or portion that is substantially larger in first and second dimensions than in a third;
"perimeter" means the outer edge;
"periphery" means the outer surface;
"polymer" means a material that contains repeating chemical units, regularly or irregularly arranged;
"polymeric" and "plastic" each mean a material that mainly includes one or more polymers and may contain other ingredients as well;
"regular interior" means the inner surface of the mask body excluding a tab;
"regular perimeter" means the path that the perimeter would have followed if a tab was not present along the perimeter;
"regular periphery" is the periphery that the mask body would have if a tab was not present on the mask body;
"respirator" means a device that is worn by a person to filter air before the air enters the person's respiratory system;
"tab" means a projecting part or flap, excluding an exhalation valve or harness, that is intentionally sized to be large enough for being pulled on by a person's fingers; and
"upper panel" means the panel that extends over the nose region and under the wearer's eyes when the respirator is worn.

### BRIEF DESCRIPTION OF THE DRAWINGS

FIG. 1 is a rear perspective view of an exemplary flat-fold maintenance-free respirator **10** in accordance with the present invention;
FIG. 2 is a front view of an exemplary mask body **12** in accordance with the present invention;
FIG. 3 is a rear view of the flat-fold maintenance-free respirator **10** in accordance with the present invention;
FIG. 4 is a bottom view of the flat-fold maintenance-free respirator **10** in accordance with the present invention;
FIG. 5 is a side view of the flat-fold maintenance-free respirator **10** in accordance with the present invention;
FIG. 6 is a side view of the flat-fold maintenance-free respirator **10,** in accordance with the present invention, disposed on a person's face;
FIG. 7 is a rear view of the flat-fold maintenance-free respirator **10,** in accordance with the present invention, in a folded condition;
FIG. 8 is a cross-sectional view of the flat-fold maintenance-free respirator **10,** in accordance with the present invention, taken along lines 8-8 of FIG. 7; and
FIGs. 9a and 9b are enlarged cross-sectional views of the central and upper panels **18** and **16,** respectively, taken from FIG. 8.

### DETAILED DESCRIPTION OF PREFERRED EMBODIMENTS

In practicing the present invention, a new flat-fold respirator has been provided that makes it easier to don and doff with less risk of placing contaminants into the mask interior. The provision of a "graspable tab" that extends from the "regular periphery" of the mask body enables the user to easily grasp that panel when opening flat-fold respirator and when donning the respirator. By having the graspable tab extend from the regular periphery, the wearer does not need to grasp the regular interior of the mask body when unfolding the mask from its folded condition.

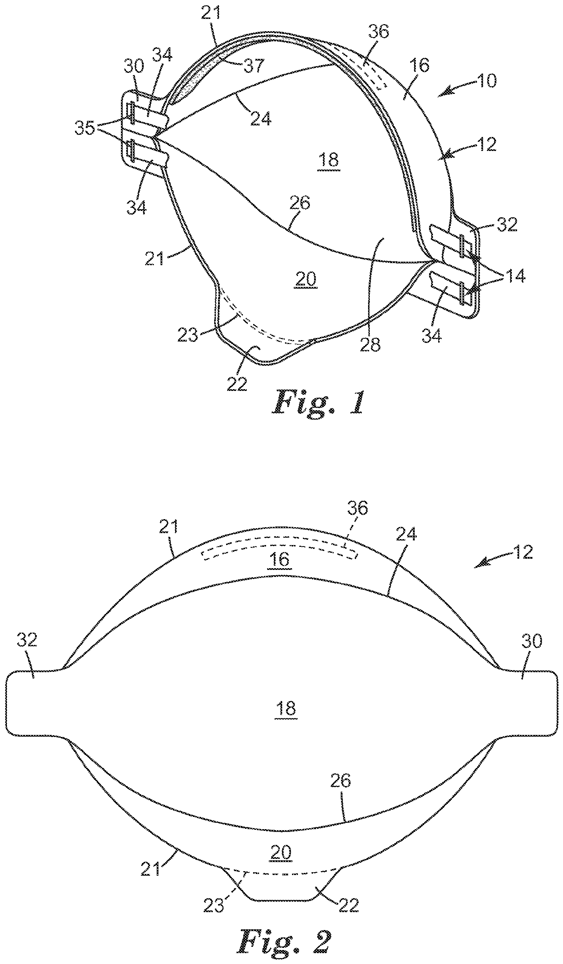

FIGs. 1-8 illustrate an example of a flat-fold maintenance-free respirator **10** that would be worn by persons who desire protection from inhaling airborne contaminants. Flat-fold respirators are not fully molded into their desired cup-shaped configuration for being worn by a person over the nose and mouth. Rather, the mask body is opened into the cup-shaped configuration from a folded condition. The illustrated flat-fold maintenance-free respirator **10** can provide the wearer with a source of clean air to breath. The respirator **10** includes a mask body **12** and a harness **14** where the mass body **12** has a plurality of panels, including an upper panel **16,** a central panel **18,** and a lower panel **20.** The mask body **12** has a periphery that includes a perimeter, particularly a face-contacting perimeter **21,** that would be located next to the wearer's face when the mask is being worn. A graspable tab **22** extends from the regular periphery, particularly the regular perimeter **23,** as noted by the dotted line **23** in FIGs. 1-4. In the illustrated embodiment, the tab **22** extends centrally from the lower panel **20.** To open the mask body into the ready-to-use configuration shown in FIGs. 1-5, the user pulls on the tab **22** in a direction away from an adjoining or opposing panel.

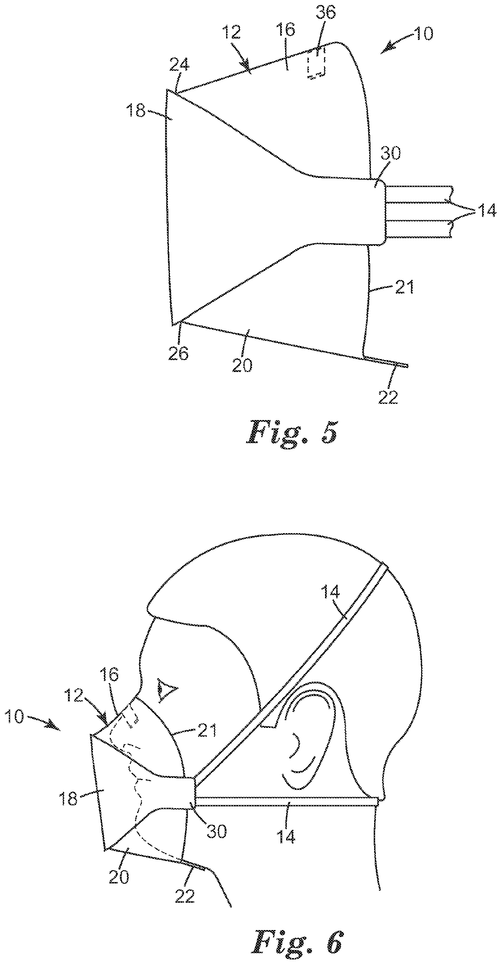

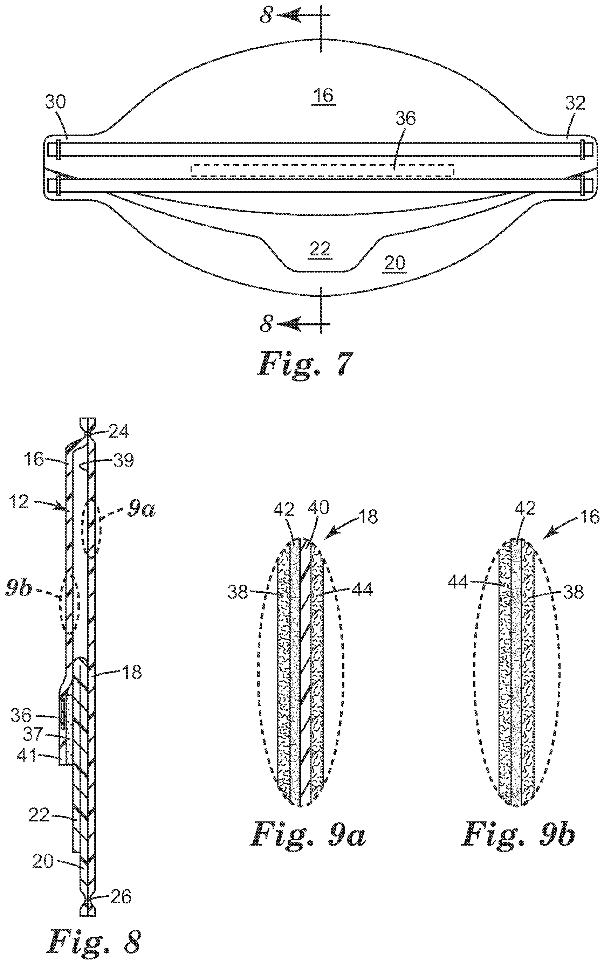

FIGs. 1-5 all show the mask body in an open configuration, ready for placement on a person's face, and FIG. 6 shows the respirator **10** being worn by a person. When a person is not wearing the respirator **10,** it may be folded flat for storage as shown in FIGs. 7 and 8. As shown in each of these figures, the central panel **18** is separated from the upper panel **16** and the lower panel **20** by first and second lines of demarcation **24** and **26.** The upper and lower panels **16** and **20** may each be folded inward towards the backside or inner surface **28** of the central panel **18** when the mask is being folded flat for storage (FIGs. 7-8) and may be opened outward for placement on a wearer's face (FIG. 6). When the mask body **12** is taken from its open configuration to its closed configuration or vice versa, the upper and lower panels **16** and **20,** respectively, rotate about the first and second lines of demarcation **24** and **26.** In this sense, the first and second lines of demarcation **24** and **26** act as first and second hinges or axis, respectively, for the upper and lower panels **16** and **20.** The tab **22** thus assists the user in pulling the panel **20** from its folded condition to open the mask body into an open, ready-to-use (or in-use) configuration.

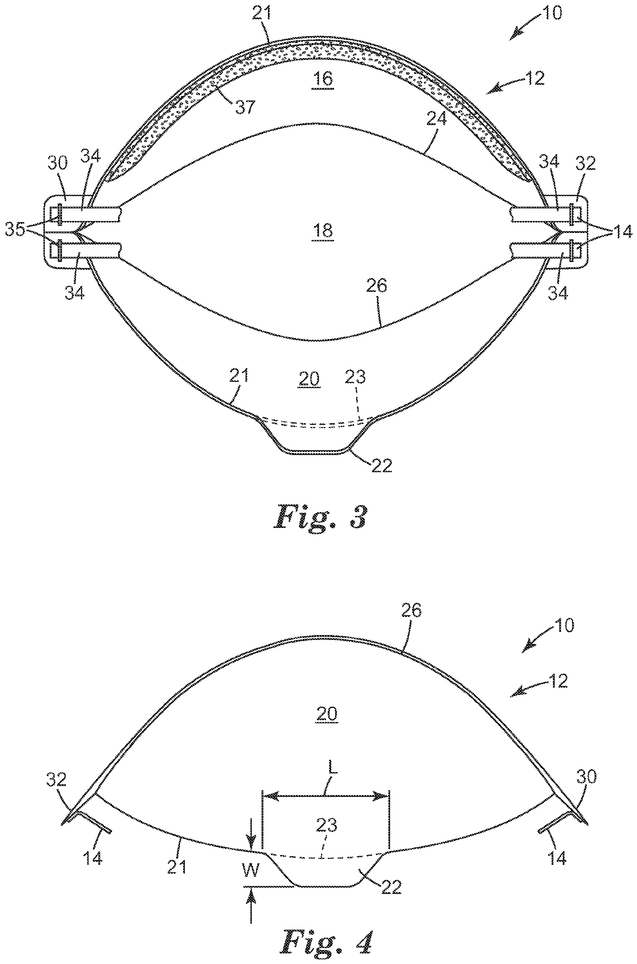

As particularly shown in FIG. 4, the tab **22** typically has a length L of about 30 to 75 millimeters (mm), more typically about 40 to 60 mm. The tab **22** also typically has a width W of about 5 to 15 mm, more typically about 8 to 12 mm. As shown, the width and length are evaluated at the widest or largest points. Although the tab is illustrated as being in a trapezoidal-type configuration, it may come in a variety of other configurations such as rectangular, semi-circular, semi-elliptical, triangular, etc. Multiple tabs also may extend from the regular periphery or regular perimeter of the mask body. Preferably the tab is centrally located so that the mask body opens in a more symmetrical manner and can be readily located by the user. Preferably, the tab extends from the regular perimeter of the mask body and would be located beneath the wearer's chin when the respirator is being donned. The tab **22** may be an integral part of the mask body, or it can be attached as a separate feature.

The maintenance-free respirator **10** also may be provided with first and second side tabs or flanges **30** and **32** that provide a region for securement of the harness **14** that may include straps or elastic bands **34.** The straps or bands **34** are stapled **35** to the mask body **12** at each opposing side to hold the mask body **12** against the face of the wearer when the mask is being worn. U.S. Patent D449,377 to Henderson et al. shows an example of tabs or flanges that can be used as strap securement regions. The harness also could be secured to the mask body by adhering, gluing, welding, etc. An example of a compression element that could be used to fasten a harness to a mask body using ultrasonic welding is described in U.S. Patents 6,729,332 and 6,705,317 to Castiglione. The band also could be welded directly to the mask body without using a separate attachment element - see U.S. Patent 6,332,465 to Xue et al. Examples of harnesses that could possibly be used in conjunction with the present invention are described in U.S. Patents 5,394,568 to Brostrom et al. and 5,237,986 to Seppala et al. and in EP 608684A to Brostrom et al. The upper panel **16** can have its structure altered to increase resistance to air flow to help prevent the fogging of protective eyewear - see copending U.S. Patent Application 11/743,716 entitled *Maintenance-Free Anti-Fog Respirator,* filed on the same day as the present document.

The upper panel **16** of mask body **12** also may include a nose clip **36** that is made from a malleable strip of metal such as aluminum, which can be conformed by mere finger pressure to adapt the respirator to the configuration of the wearer's face in the nose region. An example of a suitable nose clip is shown and described in U.S. Patents 5,558,089 and Des. 412,573 to Castiglione. Other examples are shown in US Patent Publication 2007/0044803A1 and U.S. Patent Application Serial No. 11/236,283.

FIGs. 1 and 3 particularly show that the respirator **10** also may include a nose foam 37 that is disposed inwardly along the inside perimeter of the upper panel **16.** The foam also could extend around the whole perimeter of the mask body and could include a thermochromic fit-indicating material that contacts the wearer's face when the mask is worn. Heat from the facial contact causes the thermochromic material to change color to allow the wearer to determine if a proper fit has been established - see U.S. Patent 5,617,749 to Springett et al. Examples of suitable nose foams are shown in US Patent Application Serial Nos. 11/553,082 and 11/459,949. The perimeter of the mask body can be sculpted along the upper panel **16** to improve compatibility of fit with protective eyewear - see U.S. Patent Application 11/743,734 entitled *Maintenance-Free Respirator That Has Concave Portions On Opposing Sides Of Mask Top Section,* filed on the same day as the present document.

As shown in FIGs. 7 and 8, the mask body **12** may be folded flat for storage. When placed in a folded condition, the top and bottom panels **16** and **20** are folded inwardly towards a rear (inner) surface **39** of the central panel **18.** Typically, the bottom panel **20** is folded inwardly before the top panel **16.** The lower panel **20** also may be folded back upon itself as shown in FIG. 8 so that it can be more easily grasped when opening the mask body from its folded condition. Each of the panels may include further folds, pleats, ribs, etc. to assist furnishing the mask with structure and/or distinctive appearance. For an example of a respirator that is constructed from a plurality of panels that provide a cup-shaped mask when open and a flat folded mask when closed or folded flat - see U.S. Patents 6,394,090 to Chen et al., 6,123,077 to Bostock et al., Des. 431,647 to Henderson et al., and Des. 424,688 to Bryant et al.

As shown in FIGs. 9a and 9b, the mask body may comprise a plurality of layers. These layers may include an inner cover web **38,** a stiffening layer **40,** a filtration layer **42,** and an outer cover web **44.** The layers may be joined together at the perimeter using various techniques, including adhesive bonding and ultrasonic welding. Examples of perimeter bond patterns are shown in U.S. Patent D416,323 to Henderson et al. Descriptions of these various layers and how they may be constructed are set forth below.

### Stiffening Layer

The mask body may optionally include a stiffening layer in one or more of the mask panels. The purpose the stiffening layer is, as its name implies, to increase the stiffness of the panel(s) relative to other panels or parts of the mask body. The stiffer panel(s) help support the mask body off of the face of the user. The stiffening layer may be located in any combination of the panels but is preferably located in the central panel of the mask body. Giving support to the center of the mask helps prevent the mask body from collapse onto the nose and mouth of the user when in use, while leaving the top and bottom panels relatively compliant to aid sealing to the wearer's face. The stiffening layer may be positioned at any point within the layered construction of the panel and typically is located on or near the outer cover web.

The stiffening layer can be formed from any number of web based materials. These materials may include open mesh like structures made of any number of commonly available polymers, such as polypropylene, polyethylene, and the like. The stiffening layer also may be derived from a spun bond web based material, again made from either polypropylene or polyethylene. The distinguishing property of the stiffening layer is that its stiffness, relative to the other layers within the mask body, is greater.

### Filtration Layer

Filter layers used in a mask body of the invention can be of a particle capture or gas and vapor type. The filter layer also may be a barrier layer that prevents the transfer of liquid from one side of the filter layer to another to prevent, for instance, liquid aerosols or liquid splashes from penetrating the filter layer. Multiple layers of similar or dissimilar filter types may be used to construct the filtration layer of the invention as the application requires. Filters beneficially employed in a layered mask body of the invention are generally low in pressure drop (for example, less than about 20 to 30 mm H₂O at a face velocity of 13.8 centimeters per second) to minimize the breathing work of the mask wearer. Filtration layers additionally are flexible and have sufficient shear strength so that they generally maintain their structure under expected use conditions. Examples of particle capture filters include one or more webs of fine inorganic fibers (such as fiberglass) or polymeric synthetic fibers. Synthetic fiber webs may include electret charged polymeric microfibers that are produced from processes such as meltblowing. Polyolefin microfibers formed from polypropylene that are surface fluorinated and electret charged provide particular utility for particulate capture applications. The filter layer also may comprise a sorbent component for removing hazardous or odorous gases from the breathing air. Sorbents may include powders or granules that are bound in a filter layer by adhesives, binders, or fibrous structures - see U.S. Patent 3,971,373 to Braun. A sorbent layer can be formed by coating a substrate, such as fibrous or reticulated foam, to form a thin coherent layer. Sorbent materials such as activated carbons, that are chemically treated or not, porous alumna-silica catalyst substrates, and alumna particles, are examples of sorbents that may be useful.

The filtration layer is typically chosen to achieve a desired filtering effect and, generally, removes a high percentage of particles or other contaminants from the gaseous stream that passes through it. For fibrous filter layers, the fibers selected depend upon the kind of substance to be filtered and, typically, are chosen so that they do not become bonded together during the molding operation. As indicated, the filter layer may come in a variety of shapes and forms. It typically has a thickness of about 0.2 millimeters (mm) to 1 centimeter (cm), more typically about 0.3 millimeters to 0.5 cm, and it could be a planar web coextensive with the shaping or stiffening layer, or it could be a corrugated web that has an expanded surface area relative to the shaping layer - see, for example, U.S. Patents 5,804,295 and 5,656,368 to Braun et al. The filtration layer also may include multiple layers of filter media joined together by an adhesive component. Essentially any suitable material that is known for forming a filtering layer of a direct-molded respiratory mask may be used for the mask filtering material. Webs of melt-blown fibers, such as taught in Wente, Van A., Superfine Thermoplastic Fibers, 48 Indus. Engn. Chem., 1342 et seq. (1956), especially when in a persistent electrically charged (electret) form are especially useful (see, for example, U.S. Pat. No. 4,215,682 to Kubik et al.). These melt-blown fibers may be microfibers that have an effective fiber diameter less than about 20 micrometers (µm) (referred to as BMF for "blown microfiber"), typically about 1 to 12 µm. Effective fiber diameter may be determined according to Davies, C. N., The Separation Of Airborne Dust Particles, Institution Of Mechanical Engineers, London, Proceedings 1B, 1952. Particularly preferred are BMF webs that contain fibers formed from polypropylene, poly(4-methyl-1-pentene), and combinations thereof. Electrically charged fibrillated-film fibers as taught in van Turnhout, U.S. Patent Re. 31,285, may also be suitable, as well as rosin-wool fibrous webs and webs of glass fibers or solution-blown, or electrostatically sprayed fibers, especially in microfilm form. Electric charge can be imparted to the fibers by contacting the fibers with water as disclosed in U.S. Patents 6,824,718 to Eitzman et al., 6,783,574 to Angadjivand et al., 6,743,464 to Insley et al., 6,454,986 and 6,406,657 to Eitzman et al., and 6,375,886 and 5,496,507 to Angadjivand et al. Electric charge also may be impacted to the fibers by corona charging as disclosed in U.S. Patent 4,588,537 to Klasse et al. or by tribocharging as disclosed in U.S. Patent 4,798,850 to Brown. Also, additives can be included in the fibers to enhance the filtration performance of webs produced through the hydro-charging process (see U.S. Patent 5,908,598 to Rousseau et al.). Fluorine atoms, in particular, can be disposed at the surface of the fibers in the filter layer to improve filtration performance in an oily mist environment - see U.S. Patents 6,398,847 B1, 6,397,458 B1, and 6,409,806 B1 to Jones et al. Typical basis weights for electret BMF filtration layers are about 15 to 100 grams per square meter. When electrically charged according to techniques described in, for example, the '507 patent the basis weight may be about 20 to 40 g/m² and about 10 to 30 g/m2, respectively.

### Cover Web

An inner cover web may be used to provide a smooth surface that contacts the face of the wearer, and an outer cover web may be used to entrap loose fibers from the filtration and stiffening layers or for aesthetic reasons. A cover web typically does not provide any significant shape retention to the mask body. To obtain a suitable degree of comfort, an inner cover web preferably has a comparatively low basis weight and is formed from comparatively fine fibers. More particularly, the cover web has a basis weight of about 5 to 50g/m² (typically 10 to 30g/m²), and the fibers are less than 3.5 denier (typically less than 2 denier, and more typically less than 1 denier). Fibers used in the cover web often have an average fiber diameter of about 5 to 24 micrometers (µm), typically of about 7 to 18 µm, and more typically of about 8 to 12 µm.

The cover web material may be suitable for use in the molding procedure by which the mask body is formed, and to that end, advantageously, has a degree of elasticity (typically, but not essentially, 100 to 200% at break) or is plastically deformable.

Suitable materials for the cover web are blown microfiber (BMF) materials, particularly polyolefin BMF materials, for example polypropylene BMF materials (including polypropylene blends and also blends of polypropylene and polyethylene). A suitable process for producing BMF materials for a cover web is described in U.S. Patent 4,013,816 to Sabee et al. The web may be formed by collecting the fibers on a smooth surface, typically a smooth-surfaced drum.

A typical cover web may be made from polypropylene or a polypropylene/polyolefin blend that contains 50 weight percent or more polypropylene. These materials have been found to offer high degrees of softness and comfort to the wearer and also, when the filter material is a polypropylene BMF material, to remain secured to the filter material after the molding operation without requiring an adhesive between the layers. Typical materials for the cover web are polyolefin BMF materials that have a basis weight of about 15 to 35 grams per square meter (g/m²) and a fiber denier of about 0.1 to 3.5, and are made by a process similar to that described in the '816 patent. Polyolefin materials that are suitable for use in a cover web may include, for example, a single polypropylene, blends of two polypropylenes, and blends of polypropylene and polyethylene, blends of polypropylene and poly(4-methyl-1-pentene), and/or blends of polypropylene and polybutylene. One example of a fiber for the cover web is a polypropylene BMF made from the polypropylene resin "Escorene 3505G" from Exxon Corporation and having a basis weight of about 25 g/ m² and a fiber denier in the range 0.2 to 3.1 (with an average, measured over 100 fibers of about 0.8). Another suitable fiber is a polypropylene/polyethylene BMF (produced from a mixture comprising 85 percent of the resin "Escorene 3505G" and 15 percent of the ethylene/alpha-olefin copolymer "Exact 4023" also from Exxon Corporation) having a basis weight 25 g/ m² and an average fiber denier of about 0.8. Other suitable materials may include spunbond materials available, under the trade designations "Corosoft Plus 20", "Corosoft Classic 20" and "Corovin PP-S-14", from Corovin GmbH of Peine, Germany, and a carded polypropylene/viscose material available, under the trade designation "370/15", from J.W. Suominen OY of Nakila, Finland.

Cover webs that are used in the invention preferably have very few fibers protruding from the surface of the web after processing and therefore have a smooth outer surface. Examples of cover webs that may be used in the present invention are disclosed, for example, in U.S. Patent 6,041,782 to Angadjivand, U.S. Patent 6,123,077 to Bostock et al., and WO 96/28216A to Bostock et al.

The respirator also may include an optional exhalation valve that allows for the easy exhalation of air by the user. Exhalation valves that exhibit an extraordinary low pressure drop during an exhalation are described in U.S. Patents 7,188,622, 7,028,689, and 7,013,895 to Martin et al.; 7,117,868, 6,854,463, 6,843,248, and 5,325,892 to Japuntich et al.; and 6,883,518 to Mittelstadt et al. The exhalation valve may be secured to the central panel, preferably near the middle of the central panel, by a variety of means including sonic welds, adhesion bonding, mechanical clamping, and the like - see, for example, U.S. Patents 7,069,931, 7,007,695, 6,959,709, and 6,604,524 to Curran et al and EP1,030,721 to Williams et al.

Flat-fold, maintenance-free respirators of the present invention can be manufactured according to the process described in U.S. Patents 6,123,077, 6,484,722, 6,536,434, 6,568,392, 6,715,489, 6,722,366, 6,886,563, 7,069,930, and US Patent Publication No. US2006/0180152A1 and EP0814871B1 to Bostock et al.

This invention may take on various modifications and alterations without departing from the spirit and scope thereof. Accordingly, it is to be understood that this invention is not to be limited to the above-described, but it is to be controlled by the limitations set forth in the following claims and any equivalents thereof.
It is also to be understood that this invention may be suitably practiced in the absence of any element not specifically disclosed herein.

## Claims

1. A respirator mask body (12) that comprises a plurality of panels (16, 18, 20) that can fold in towards each other and that can unfold into an open in-use configuration, and that further comprises a graspable tab (22) that extends from the regular periphery of at least one of the panels (16, 18, 20) such that the tab (22) assists the user in pulling the panel(s) from a folded condition to open the respirator mask body (12) from that folded configuration into an open ready-to-use configuration, **characterized in that** the tab (22) extends from the face-contacting perimeter of the mask body (12).

2. The respirator body of claim 1, wherein the tab (22) is disposed centrally along the face-contacting perimeter of the respirator mask body (12).

3. The respirator mask body of claim 1, wherein the plurality of panels (16, 18, 20) includes a lower panel (20), the graspable tab (22) extending centrally from the regular perimeter of the lower panel (20) of the mask body (12).

4. The respirator mask body of claim 3, where the respirator mask body (12) further comprises an upper panel (16) and a central panel (18).

5. The respirator mask body of claim 1, wherein the tab (22) has a length L of about 30 to 75 millimeters and has a width W of about 5 to 15 millimeters.

6. The respirator mask body of claim 5, wherein the tab (22) has a length L of about 40 to 60 millimeters and has a width W of about 8 to 12 millimeters.

7. The respirator mask body of claim 6, wherein the tab (22) has a trapezoidal shape.

8. The respirator mask body of claim 1, wherein the tab (22) extends from the regular perimeter of the respirator mask body (12) and is centrally located.

9. The respirator mask body of claim 1, wherein the tab (22) extends from the regular perimeter of the respirator mask body (12) and is located beneath the chin when the respirator is worn by a person.

10. The respirator mask body of claim 1, wherein the tab (22) is trapezoidal in configuration.

11. A maintenance-free, flat-fold respirator that comprises:
the respirator mask body (12) of claim 1; and
a harness (14) that is secured to the respirator mask body (12).

## Patentansprüche

1. Atemmaskenkörper (12), der eine Vielzahl von Platten (16, 18, 20), die sich aufeinander einfalten können und die sich in eine offene Gebrauchskonfiguration entfalten können, umfasst, und der ferner eine greifbare Lasche (22) umfasst, die sich von dem regulären Umfangsrand von mindestens einer der Platten (16, 18, 20) erstreckt, sodass die Lasche (22) dem Anwender beim Ziehen der Platte(n) aus einem gefalteten Zustand assistiert, um einen Atemmaskenkörper (12) aus der gefalteten Konfiguration in eine offene, gebrauchsfertige Konfiguration zu öffnen, **dadurch gekennzeichnet, dass** die Lasche (22) sich von dem gesichtsberührenden Umfang des Maskenkörpers (12) erstreckt.

2. Atemmaskenkörper nach Anspruch 1, wobei die Lasche (22) mittig entlang des gesichtsberührenden Umfangs des Atemmaskenkörpers (12) angeordnet ist.

3. Atemmaskenkörper nach Anspruch 1, wobei die Vielzahl von Platten (16, 18, 20) eine untere Platte (20) einschließt, wobei sich die greifbare Lasche (22) mittig aus dem regulären Umfang der unteren Platte (20) des Maskenkörpers (12) erstreckt.

4. Atemmaskenkörper nach Anspruch 3, wobei der Atemmaskenkörper (12) ferner eine obere Platte (16) und eine mittlere Platte (18) umfasst.

5. Atemmaskenkörper nach Anspruch 1, wobei die Lasche (22) eine Länge L von etwa 30 bis 75 Millimetern aufweist und eine Breite W von etwa 5 bis 15 Millimetern aufweist.

6. Atemmaskenkörper nach Anspruch 5, wobei die Lasche (22) eine Länge L von etwa 40 bis 60 Millimetern aufweist und eine Breite W von etwa 8 bis 12 Millimetern aufweist.

7. Atemmaskenkörper nach Anspruch 6, wobei die Lasche (22) eine trapezförmige Gestalt aufweist.

8. Atemmaskenkörper nach Anspruch 1, wobei die Lasche (22) sich vom regulären Umfang des Atemmaskenkörpers (12) erstreckt und mittig lokalisiert ist.

9. Atemmaskenkörper nach Anspruch 1, wobei die Lasche (22) sich von dem regulären Umfang des Atemmaskenkörpers (12) erstreckt und unterhalb des Kinns lokalisiert ist, wenn die Atemmaske von einer Person getragen wird.

10. Atemmaskenkörper nach Anspruch 1, wobei die Lasche (22) von trapezförmiger Konfiguration ist.

11. Wartungsfreie, flachgefaltete Atemmaske, die Folgendes umfasst:
den Atemmaskenkörper (12) nach Anspruch 1; und
eine Bebänderung (14), die an dem Atemmaskenkörper (12) befestigt ist.

## Revendications

1. Corps de masque respiratoire (12) qui comprend une pluralité de panneaux (16, 18, 20) qui peuvent se replier l'un vers l'autre et qui peuvent se déplier en une configuration d'utilisation ouverte, et qui comprend en outre une languette préhensible (22) qui s'étend à partir de la périphérie normale d'au moins un des panneaux (16, 18, 20) de telle sorte que la languette (22) aide l'utilisateur à tirer le(s) panneau(s) d'une condition pliée pour ouvrir le corps de masque respiratoire (12) de cette configuration pliée vers une configuration ouverte prête à l'emploi, **caractérisé en ce que** la languette (22) s'étend à partir du périmètre en contact avec le visage du corps de masque (12).

2. Corps de masque respiratoire selon la revendication 1, dans lequel la languette (22) est disposée de façon centrale le long du périmètre en contact avec le visage du corps de masque respiratoire (12).

3. Corps de masque respiratoire selon la revendication 1, dans lequel la pluralité de panneaux (16, 18, 20) inclut un panneau inférieur (20), la languette préhensible (22) s'étendant de façon centrale à partir du périmètre normal du panneau inférieur (20) du corps de masque (12).

4. Corps de masque respiratoire selon la revendication 3, où le corps de masque respiratoire (12) comprend en outre un panneau supérieur (16) et un panneau central (18).

5. Corps de masque respiratoire selon la revendication 1, dans lequel la languette (22) a une longueur L d'environ 30 à 75 millimètres et a une largeur W d'environ 5 à 15 millimètres.

6. Corps de masque respiratoire selon la revendication 5, dans lequel la languette (22) a une longueur L d'environ 40 à 60 millimètres et a une largeur W d'environ 8 à 12 millimètres.

7. Corps de masque respiratoire selon la revendication 6, dans lequel la languette (22) a une forme trapézoïdale.

8. Corps de masque respiratoire selon la revendication 1, dans lequel la languette (22) s'étend à partir du périmètre normal du corps de masque respiratoire (12) et est située en position centrale.

9. Corps de masque respiratoire selon la revendication 1, dans lequel la languette (22) s'étend à partir du périmètre normal du corps de masque respiratoire (12) et est située en dessous du menton lorsque le masque respiratoire est porté par une personne.

10. Corps de masque respiratoire selon la revendication 1, dans lequel la languette (22) est de configuration trapézoïdale.

11. Masque respiratoire replié à plat sans entretien, qui comprend :
le corps de masque respiratoire (12) selon la revendication 1 ; et
un harnais (14) qui est fixé au corps de masque respiratoire (12).
